# EUROPEAN PATENT APPLICATION

(11) **EP 1 622 215 A1**
(43) Date of publication of application: **01.02.2006**
(21) Application number: 04728063.1
(22) Date of filing: 16.04.2004
(51) Int. Cl.: H01M 4/02, H01M 4/04, H01M 4/48, H01M 10/40

(54) **NEGATIVE ELECTRODE FOR LITHIUM SECONDARY CELL, LITHIUM SECONDARY CELL EMPLOYING THE NEGATIVE ELECTRODE, FILM DEPOSITION MATERIAL B USED FOR FORMING NEGATIVE ELECTRODE, AND PROCESS FOR PRODUCING NEGATIVE ELECTRODE**

(30) Priority: 28.04.2003 JP 2003123938; 19.08.2003 JP 2003295363; 21.08.2003 JP 2003297443; 25.08.2003 JP 2003299701
(71) Applicant: Sumitomo Titanium Corporation, Amagasaki-shi, Hyogo 660-8533 (JP)
(72) Inventor: NATSUME, Yoshitake, Amagasaki-shi, Hyogo 660-8533 (JP); OGASAWARA, Tadashi, Amagasaki-shi, Hyogo 660-8533 (JP); AZUMA, Kazuomi, Amagasaki-shi, Hyogo 660-8533 (JP)
(74) Representative: Hartz, Nikolai
(86) International application number: PCT/JP2004/005527
(87) International publication number: WO 2004/097962

(57) **Abstract**

Greatly improved is an initial efficiency, which would be otherwise low as a fault, without reducing a magnitude of an initial charge capacity, which is a feature of a lithium secondary battery using an SiO as an negative electrode. A cycle characteristic is improved. In order to realize the improvements, a thin film of silicon oxide formed by vacuum vapor deposition or sputtering as an negative electrode active material layer 32 on a surface of a collector 31. The thin film is formed preferably by means of an ion plating method. The silicon oxide is SiOx (0.5 ≤ x < 1.0) and a film thickness is in the range of from 0.1 to 50 µm. A vacuum vapor deposition source that is used is an SiO deposit having a weight decrease percent (a rattler value) in a rattler test of 1.0% or less. In vacuum vapor deposition, the surface of the collector 31 is applied with a cleaning treatment in a vacuum or an inert atmosphere and thereafter, a thin film of silicon oxide is formed on the surface of the collector without exposing the surface of the collector to the air atmosphere.

## Description

### TECHNICAL FIELD

This invention relates to a lithium secondary battery negative electrode, a lithium secondary battery using the negative electrode, a film formation material used in formation of the negative electrode and fabricating method for the negative electrode.

### BACKGROUND ART

Alithiumsecondary batteryeffecting charge and discharge by occlusion and release of lithium ions has had a wide range of applications such as OA equipment; especially portable information equipment including a portable telephone and a personal computer, as a power supply since the battery has features of a high capacity, a high voltage and a high energy density. In this lithium secondary battery, lithium ions move to the negative electrode from the positive electrode during charge, while lithium ions occluded in the negative electrode moves to the positive electrode during discharge.

Carbon powder has been well used as an negative electrode active material constituting the negative electrode of a lithium secondary battery. This is because carbon powder used in the negative electrode has a high comprehensive evaluation on various kinds of characteristics such as a capacity of a carbon negative electrode, an initial efficiency and a cycle life, which will be detailed later. An negative electrode sheet is completed in a powder kneaded coated dried method in which the carbon powder is mixed into a binder solution to prepare a slurry, the slurry is coated on a surface of a collector plate, and dried, followed by pressing. Incidentally, positive electrode activematerials constituting a positive electrode that are used are oxides of transition metals containing lithium; mainly, LiCoO₂ and the like.

One of problems of a carbon negative electrode that is currently popular is that a theoretical capacity is smaller than other negative electrodes. The reason why a carbon negative electrode is popular, though with a smaller theoretical capacity is that the carbon negative electrode is high in characteristics other than a capacity, such as an initial efficiency and a cycle life and has a good balance between the characteristics.

A lithium secondary battery well used as a power supply of a portable information equipment is requested to further increase a capacity thereof from the viewpoint, of which research and development have been proceeded on an negative electrode active material having a capacity larger than carbon powder. One of such negative electrode active materials is SiO and a theoretical capacity of SiO amounts to several times as large as that of carbon. Despite of such a fact, an SiO negative electrode has not been actually used. The greatest reason is that an initial efficiency of an SiO negative electrode is extremely low.

An initial efficiency is a ratio of an initial discharge capacity to an initial charge capacity, which is one of important factors to be considered in battery design. A low initial efficiency means that lithium ions incorporated into the negative electrode during initial charge are not sufficiently released during initial discharge and a low initial efficiency does not justify easy development into practical use even though it has a greater theoretical capacity. Hence, various measures have been tried in order to raise an initial efficiency of an SiO negative electrode, one of which is a method described in JP No. 2997741 in which lithium is incorporated into SiO in advance. Incidentally, a desired initial efficiency is 75% or more.

An SiO negative electrode is fabricated in a powder kneaded coated dried method in which, in a similar way to that in a case of a carbon negative electrode, fine powder of SiO is mixed into a binder solution to prepare a slurry, the slurry is coated on a surface of a collector plate, and dried, followed by pressing. In a case where an negative electrode is obtained by incorporating lithium into SiO in advance as well, an SiO negative electrode is fabricated by stacking powder on a surface of a collector plate using a similar powder kneaded coated dried method.

An SiO negative electrode containing lithium fabricated in such a way is effective for raising an initial efficiency of a lithium secondary battery. A method in which lithium is incorporated in advance into SiO, however, lowers an initial charge capacity by the presence thereof in the bulk to thereby substantially reduce a magnitude of theoretical capacity which is an excellent characteristic of SiO. Therefore, a measure has been awaited that raises an initial efficiency of an SiO negative electrode without reducing an initial charge capacity thereof.

In addition thereto, a lithium secondary battery is requested to be further down sized, whereas the battery has had another problem of difficulty down sizing without respect to the presence or absence of lithium therein since an SiO negative electrode fabricated by means of the powder kneaded coated dried method is porous and of a low density.

It is a first object of the invention to greatly improve an initial efficiency, which would be otherwise low as a fault, without reducing a magnitude of an initial charge capacity, which is a feature of a lithium secondary battery using an SiO as an negative electrode.

It is a second object of the invention to realize down sizing of an negative electrode using SiO.

It is a third object of the invention to improve a cycle characteristic while improving an initial efficiency.

### DISCLOSURE OF THE INVENTION

The inventor has had a conception different from conventional in order to achieve the objects, in which it is intended to form a dense layer of SiO on a surface of a collector by vacuum vapor deposition. As a result, it has been found that not only does a capacity per a unit volume in an SiO layer of the invention increases as compared with a conventional SiO layer fabricated with a powder knead coated dried method, but a low initial efficiency, which has been a problem of the conventional SiO layer , is also drastically improved without being accompanied with reduction in initial charge capacity. It has been found that among the vacuum vapor deposition, a thin film formed with an ion plating method has especially a high performance, that a sputtering film also has an effect similar to that of a vacuum vapor deposited film and that a deposit of SiO or a sintered compact fabricated from the SiO deposit, especially a specific sintered compact described later, is preferable as a film formation material used in vacuum vapor deposition.

The following is considered the reason why a powder kneaded coated dried layer made of SiO has a low initial charge capacity, whereas neither a vacuum vapor deposited layer nor a sputtering layer has a low initial charge capacity.

SiO powder is produced as follows, for example. A mixture of Si powder and SiO₂ powder is heated in a vacuum to thereby generate an SiO gas, to deposit the gas on a deposition section at a low temperature and to obtain an SiO deposit. A molar ratio of O to Si in the SiO deposit obtained with this method is almost 1. The SiO deposit is pulverized to obtain SiO powder and the SiO material is oxidized by oxygen in the air while the SiO deposit is pulverized into powder or SiO powder is used, with the result that a molar ratio of O to Si in an SiO preform exceeds 1. In addition, SiO powder is increasingly more oxidized while the SiO powder is stacked with the powder kneaded coated dried method because of a large surface area of the SiO powder. Therefore, a molar ratio of 0 to Si is raised in the powder kneaded coated dried layer of SiO. With a higher ratio of O to Si in the SiO powder of the powder kneaded coated dried layer, lithium ions occluded in the SiO layer in initial charge are harder to be released during discharge, resulting in a lower initial efficiency.

Contrast thereto, increase in oxygen molar ratio is suppressed in a vacuum vapor deposition method or a sputtering method since a film is formed under vacuum with the result that lowering of an initial efficiency is suppressed. Besides, a thin film formed with a vacuum vapor deposition method or a sputteringmethod is dense . On the other hand, the powder kneaded coated dried layer is a powder compact obtained only by press-compacting powder and therefore a filling factor is low. Since an initial charge capacity is a charge quantity per a unit volume of an negative electrode active material, a denser thin film has a higher initial charge capacity and a charge capacity is also kept higher in the second cycle and those subsequent thereto.

The reason why a thin film formed with an ion plating method has especially a high performance is considered to be an influence of an observed tendency that even in a case where SiO with a molar ratio of O to Si of 1 to 1 is used, oxygen in the SiO decreases. That is, oxygen in SiO is desirably as small as possible because of a strong bondability of oxygen with a lithium ion, and with an ion plating method adopted, a molar ratio of O to Si in an SiO film is reduced up to 0.5. Incidentally, the reason why an oxygen molar ratio is reduced in an ion plating method is not clear currently.

Contrary thereto, with increase in an oxygen quantity in an atmosphere in vacuum vapor deposition or sputtering, an oxygen molar ratio in SiO can be raised.

In vacuum vapor deposition, the vapor deposition source, that is a film formation material, is heated and melted by resistance heating, induction heating, electron beam irradiation and the like in a vacuum to deposit the vapor on a surface of a substrate. A film formation material here that can be used is, for example, a mixed sintered compact of Si powder and SiO₂ powder. An SiO sintered compact that is used is produced from the SiO deposit or powder, particles, lumps and others of SiO obtained by pulverizing the SiO deposit. As a result of investigation conducted by the inventors, it was found that a film formation material in forming a dense SiO layer by vacuum vapor deposition on a surface of a collector is preferably an SiO deposit or an SiO sintered compact in terms of an initial efficiency and a film formation rate as compared with a mixed sintered compact of Si and SiO₂, among which especiallypreferable is a powder sintered compact produced with contrivances on powder particle diameters and a sintering atmosphere.

That is , it has been known that SiO as a film formingmaterial used in vacuum vapor deposition of silicon oxide is higher in evaporation rate than a mixed material of Si and SiO₂ in vapor deposition. Hence, a film formation material of SiO can increase a film formation rate of a thin film. A vaporization characteristic of a film formation material made of SiO produced by sintering depends on various conditions such as particle diameters, a producing method and others of SiO powder used in production and an evaporation rate of a film formation material after sintering decreases as compared with SiO before sintering; therefore disabling improvement on productivity of a thin film by using a film formation material made of SiO to be expected.

The inventor has conducted studies on an SiO sintered compact capable of sustaining an evaporation rate at a high value even after sintering and a producing method therefor. As a result, the inventor has been able to earn the following findings and knowledge.

At first, the reason why an evaporation rate of SiO changes between values before and after sintering is that a slight variation occurs in composition resulted in sintering of SiO. On the other hand, SiO₂ is stabler in terms of energy than SiO and an evaporation rate of SiO₂ is lower than SiO. Hence, even in a case where a film formation material of SiO is produced, SiO is locally oxidized and partly transformed into SiO₂; therefore, it is inferred to reduce an evaporation rate.

Oxidation of SiO can occur in natural oxidation while being left in air or in sintering in an oxygen atmosphere. Therefore, SiO powder with a small surface area is used to thereby prevent natural oxidation and besides, by sintering such SiO powder in a non-oxidizing atmosphere, oxidation of SiO can be suppressed to the lowest possible level. The powder sintered compact of SiO produced this way has a high evaporation rate and decreases an evaporation residue to an extremely small value when a thermogravimetric measurement is performed. When a thin film of the negative electrode of a lithium secondary battery is vapor deposited with the SiO sintered compact, a molar ratio of O to Si decreases to therefore, improve an initial efficiency of the lithium secondary battery.

SiO sintered compact essentially increases a production cost because of necessity for sintering SiO deposit. Therefore, there has been a desire for an SiO deposit comparatively low in cost from the viewpoint of economy. An SiO deposit has a problem of degrading a cycle characteristic as compared with a SiO sintered compact.

That is, the cycle characteristic means a characteristic of decreasing a discharge quantity in a case where a pair of charge and discharge is repeated, which is one of important factors in battery design including an initial efficiency and an initial charge capacity. If an SiO film is formed on a surface of an negative electrode collector as an negative electrode active material, a cycle characteristic is degraded, though with increase in initial efficiency and a strong tendency is observed that a discharge quantity decreases each time when a pair of charge and discharge are repeated. This tendency is more conspicuous in a case where an SiO deposit is used as a film formation material than in a case where an SiO sintered compact is used as the material. The inventor has found a measure described below in order to cope with reduction in cycle characteristic in a case where such an SiO deposit is used.

The inventor has been conducting a research on an vapor deposited film used as a package material for foods and medicines , especially SiO used in vapor deposition as a vapor deposition source, separately from development of a lithium secondary battery negative electrode as described above. In the course of the research, the inventor has found and disclosed that if an SiO deposit with a weight decrease percent (a rattler value) in a rattler test of 1.0% or less is used as a vapor deposition source, a splash phenomenon in formation of a vapor deposited film is suppressed (a pamphlet of International Publication No. WO 03/025246).

That is, in vacuum vapor deposition, a film formation material (a vapor deposition source) is heated and melted by resistance heating, induction heating, electron beam irradiation or the like in a vacuum and the vapor thereof is deposited on a surface of a substrate. For example, a mixture of Si powder and SiO₂ powder is heated in a vacuum to thereby generate SiO gas and to deposit an SiO deposit on a deposition section at a low temperature and thus obtained SiO deposit is used as a film forming material in this case. In a case of an SiO deposit, however, splash phenomena occur many times in vapor deposition, and defects such as a pin hole are generated in a formed vapor deposited film of SiO, having led to a problem of reduction in permeation resistance.

The inventor has paid attention to physical properties of a film forming material and conducted various studies on relationships of the physical properties with the splash phenomenon. As a result, it was apparent that brittleness of a film forming material itself largely influences the splash phenomenon and that a weight decrease percent (a rattler rate) in a rattler test used in evaluation of a green compact is effective as an evaluation criterion of brittleness of the material at which the splash phenomenon is hard to occur.

In the course of a further continued study, it has been found that if a SiO deposit with a weight decrease percent (a rattler value) obtained in a rattler test of 1.0% or less is used in formation of an SiO film in fabrication of the negative electrode of the lithium secondary battery, not only an initial efficiency but also a cycle characteristic are improved: that is reduction in cycle characteristic, which is a phenomenon specific to a case where an SiO deposit is used is effectively suppressed.

An SiO deposit is lower in denseness and easier to occur breakage or chipping as compared with an SiO sintered compact. In a case where the SiO deposit is used in formation of an SiO film of the negative electrode for a lithium secondary battery, a strong tendency is observed that a discharge quantity decreases each time of repetition of a pair of charge and discharge. The tendency is rarely observed in a case where an SiO sintered compact is used. With an SiO deposit with a weight decrease percent (a rattler value) measured in a rattler test of 1.0% or less used, reduction in cycle characteristic, which is a phenomenon specific to when such an SiO deposit is used, can be effectively suppressed.

The inventor has paid attention to adhesiveness of an SiO film to an negative electrode collector as one of causes by which a cycle characteristic of an SiO film type negative electrode is degraded. That is, the inventor thought that since SiO is comparatively high in expansion in charge, repetition of a pair of charge and discharge is a cause for peeling-off of the SiO film from the collector, which leads to degradation in cycle characteristic. The inventor gave attention to a cleaning treatment conducted on the collector before film formation as a cause for reducing adhesiveness of the SiO film and conducted various kinds of studies through experiments. As a result, the following facts have been found.

In a case where a film is formed, a cleaning treatment, generally, is conducted on a substrate before film formation. To be concrete, cleaning, drying and others are conducted in the air. The inventor thought that such a cleaning treatment is inappropriate in fabrication of an SiO film type negative electrode and changed the cleaning treatment in a way such that a cleaning treatment is applied to the negative electrode collector, which is a substrate, in a non-air atmosphere and directly subsequent thereto, a film is formed on a surface of the substrate without exposing the surface to the air atmosphere .

As a result, though it was not sure whether adhesiveness is improved, improvement on a cycle characteristic was clearly confirmed.

The invention has been developed based on the findings and knowledge and directed to a lithium secondary battery negative electrode, a lithiumsecondarybattery, a film formation material and a fabricating method for the lithium secondary battery.
(1-1) A lithium secondary battery negative electrode having a thin film of silicon oxide formed by vacuum vapor deposition or sputtering on a surface of a collector.
(1-2) A lithium secondary battery negative electrode, being an SiO film type negative electrode obtained by forming a silicon oxide film as an negative electrode active material on a surface of the collector and having a capacity sustainability in discharge in the tenth time of 98% or more.
(2) A lithium secondary battery using one of the negative electrodes.
(3) A film forming material, used in forming a thin film of silicon oxide of a lithium secondary battery negative electrode with vacuum vapor deposition or sputtering, and being a deposit of SiO or a sintered compact produced from the deposit.
(3-1) A film formation material, especially being the sintered compact and having an evaporation residue when a thermogravimetric measurement on a sintered compact sample is conducted in a vacuum atmosphere under a pressure of 10 Pa or less at a temperature of 1300°C of 4% or less of the mass of the sample before the measurement.
(3-2) A film formation material, being a powder sintered compact categorized in the sintered compact and having an average particle diameter of particles of the powder of 250 µm or more.
(3-3) Afilmformationmaterial, especiallybeingadeposit of SiO and having a weight decrease percent (a rattler value) in a rattler test of 1.0% or less. By using the SiO deposit in formation of an SiO film, a lithium secondary battery negative electrode of (1-2) can be fabricated.
(4-1) A fabricating method for a lithium secondary battery negative electrode forming a thin film of silicon oxide on a surface of the collector by vacuum vapor deposition or sputtering.
(4-2) A fabricating method for a lithium secondary battery negative electrode, wherein in formation of silicon oxide film as an negative electrode active material on a surface of the negative electrode collector, the surface of the collector is applied with a cleaning treatment in a vacuum or an inert atmosphere and thereafter, film formation with silicon oxide is performed on the surface of the collector without exposing the surface of the collector to the air atmosphere.

Amolar ratio of O to Si in silicon oxide forming an negative electrode active material layer of a lithium secondary battery negative electrode of (1-1) is preferably in the range of from 0.5 to 1.2 and especially preferably 0.5 or more and less than 1. That is, in the invention, a molar ratio of O to Si in silicon oxide forming an negative electrode active material layer can be reduced to a value lower than in a case of a powder kneaded coated dried layer. To be concrete, the molar ratio can be not only reduced to a value less than 1 , but intentionally raised to a value more than 1.

The molar ratio is preferably in the range of from 0.5 to 1.2 and especially preferably 0.5 or more and less than 1 , which is sufficiently lower than in the powder kneaded coated dried layer. In other words, as silicon oxide, SiOx (0.5 ≤ x ≤1.2) is preferable and SiOx (0.5 ≤x<1) isespeciallypreferable. That is, the molar ratio is preferably 1.2 or less and especially less than 1 in order to suppress a phenomenon that a lithium ion bonds to oxygen in the negative electrode. On the other hand, if the molar ratio is less than 0.5, cubic expansion when lithium ions are occluded, which causes the negative electrode active material layer to have a possibility of destruction.

A rattler test on a film formation material of (3-3) and a lithium secondary battery negative electrode (1-2) is a test according to "A rattler test method for a metal green compact JPMA standard 4-69" formulated by Japan Powder Metallurgy Association (JPMA) . The test method is originally a test method for evaluating a wear resistance and a pointed end stability of a metal green compact obtained by press-molding metal powder. In the invention, the test method is used for evaluation of a physical property of an SiO deposit. To be concrete, a test piece in the same size and shape as in a rattler test is sampled from an SiO deposit by mechanical working or the like, the test piece is subjected to the same test method as in a rattler test to obtain a weight decrease percent between values before and after the test (a rattler value). In an original test, compressibility and moldability of metal powder are evaluated but in the invention, denseness, uniformity or the like of an SiO deposit is evaluated.

Not only an initial efficiency but also a cycle characteristic are improved by using a dense and uniform SiO deposit with a rattler value of 1.0% or less in formation of an SiO film. To be concrete, a capacity sustainability at discharge in the tenth time is improved to a value of 98% or more. In a case where a common SiO deposit is used, a capacity sustainability is as low as 90% or less. Though the reason why reduction in rattler value affects so as to improve a cycle characteristic is not definite, it is currently inferred as follows:
A layered structure composed of a positive electrode collector, a positive electrode active material layer, an electrolyte, a separator, an negative electrode active material layer and an negative electrode collector at a lithium secondary battery. It is imagined that if there is a non-uniform portion, or a depression or protrusion locally in the negative electrode active material layer, destruction of the layer structure starts from the portion, which results in reduction in cycle characteristic. Hence, making an negative electrode active material layer uniform is considered to be effective for improvement on a cycle characteristic. Denseness and uniformity of an SiO deposit, which is a film formation material, is necessary for forming a uniform negative electrode active material layer. This is thought to be the reason why an SiO deposit with a small rattler value is effective for improvement on a cycle characteristic.
A cleaning treatment in a vacuum or an inert atmosphere in a fabrication method for a lithium secondary battery negative electrode of (4-2) that is named can be, for example, surface treatment bombardment by direct current magnetron discharge in a vacuum chamber.
A vacuum vapor deposition method and a sputtering method can be named as a film forming method and especially preferable is an ion plating method categorized in the vacuum vapor deposition method. In a case where a cleaning treatment is conducted in a vacuum, a film is formed directly subsequent to the cleaning, which is reasonable since both steps are implemented in the same atmosphere, while both steps can be performed in different atmospheres, wherein a cleaning treatment is conducted in an inert atmosphere and a film is formed under vacuum. What is important are that a process from a cleaning treatment on a collector to film formation is implemented in a vacuum or an inert atmosphere and that a surface of the collector is not exposed to the air atmosphere in the course of the process.
An SiO deposit or an SiO sintered compact can be used as a film formation material and the use of a dense and hard SiO sintered compact renders a cycle characteristic better. On the other hand, a production cost of an SiO deposit is lower. It is one of significant values of a fabricating method of (4-2) that even the use of a low cost SiO deposit can secure a good cycle characteristic.
A thickness of a thin film of silicon oxide is preferably in the range of from 0.1 to 50 µm. If the thickness is less than 0.1 µm, a capacity per a unit volume increases, but a capacity per a unit area decreases. On the other hand, since this thin film is an insulating film, a case arises where a collecting efficiency to a collector from the thin film is problematically reduced. An especially preferable film thickness is in the range of from 0.1 to 20 µm.
Preferable is an ion plating method among methods categorized into vacuum vapor deposition. The reason why is as described above.
A metal thin plate is preferable as a collector. Cu, Al and others can be used as a metal of the thin plate. A thickness thereof is preferably in the range of 1 to 50 µm. If the thickness is excessively small, fabrication is difficult and a mechanical strength is also reduced problematically. On the other hand, if the thickness is excessively large, down-sizing an negative electrode is hindered in fabrication.
A positive electrode has a structure in which a positive electrode active material layer is formed on a surface of a collector. Positive electrode active materials that can be mainly used are oxides of transition metals containing lithium such as LiCoO₂, LiNiO₂, LiMn₂O₄ and others. A fabrication method for a positive electrode is commonly implemented in a powder kneaded coated dried method in which fine powder of oxide is mixed into a binder solution to obtain a slurry, the slurry is coated on a surface of a collector plate and and dried, followed by pressing, while a positive electrode can also be fabricated in a similar way to that in the case of an negative electrode.
An electrolyte that can be used is, for example, a nonaqueous electrolyte containing ethylene carbonate or the like.
A film formation material of (3) is especially effective for vacuum vapor deposition, while also being used in sputtering with an effect. No specific limitation is imposed on a bulk density of a sintered compact of silicon monoxide, while the bulk density is preferably 80% or more and more preferably 95% or more with respect to aspects of effective suppression of splashing and prevention of breakage and chipping-off in handling.

### BRIEF DESCRIPTION OF THE DRAWINGS

Fig. 1 is a longitudinal sectional view of a lithium secondary battery showing an embodiment of the invention.
Fig. 2 is a sectional view showing a construction of a thermogravimetric measurement instrument used in theremogravimetric measurement.
Fig. 3 is a graph showing a change in mass of a measurement sample in a case where theremogravimetric measurement is implemented.

### BEST MODE FOR CARRYING OUT THE INVENTION

Description will be given of an embodiment of the invention based on the accompanying drawing.

### (First Embodiment)

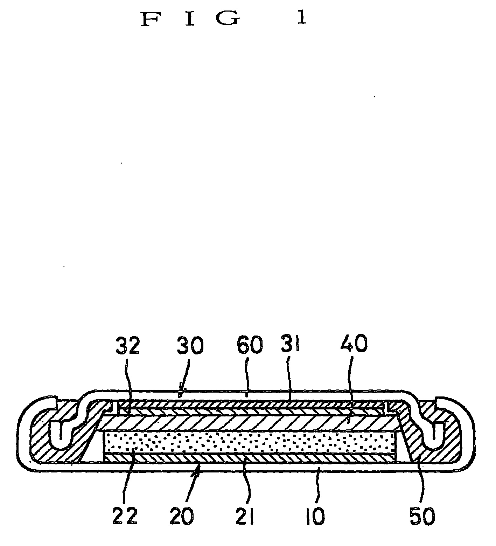

A lithium secondary battery of the first embodiment is a so-called button cell as shown in Fig. 1 and equipped with a circular flat case 10 forming a positive electrode face. The case 10 is made of a metal, and a positive electrode 20 and an negative electrode 30 are laminated in the order from below and accommodated inside thereof. The positive electrode 20 is constituted of a collector 21 made of a circular metal thin plate and a positive electrode active material layer 22 formed on the surface of the collector 21. Similarly, the negative electrode 30 is constituted of a collector 31 made of a circular metal thin plate and an negative electrode active material layer 32 formed on a surface of the collector 31. The active material layers of both electrodes are opposite each other and a separator 40 is sandwiched between opposing faces of the layers, the constituents of which are thus stacked, and the layered structure is accommodated in the case 10.

An electrolyte together with the positive electrode 20 and the negative electrode 30 is accommodated in the case 10. Opening sections of the case 10 are sealed with a cover 60 with a sealing member 50 interposed therein and thereby, accommodated items are sealed inside the case 10. The cover 60 also works as a member forming an negative electrode face and is in contact with the collector 31 of the negative electrode 30. The case 10 also works as the member forming the positive electrode face is in contact with the collector 21 of the positive electrode 20.

What attention is paid to about a lithium secondary battery of the first embodiment is that the negative electrode active material layer 32 of the negative electrode 30 is constituted of a dense thin film made of silicon oxide formed on the collector 31 by vacuum vapor deposition or sputtering, preferably ion plating, which is a kind of the vapor deposition, using SiO as a raw material. The silicon oxide can be produced as SiOn (0.5 ≤ n < 1.2) by controlling an oxygen concentration in the atmosphere, though SiO is used as a starting material. A thickness of a thin film is appropriately in the range of from 0.1 to 50 µm.

On the other hand, the positive electrode active material layer 22 of the positive electrode 20 is fabricated in a powder kneaded coated dried method, as adopted in a conventional procedure, in which powder of a transition metal containing lithium such as LiCoO₂ is mixed into a binder solution to obtain a slurry, the slurry is coated on a surface of the collector 21, and dried, followed by pressing.

Features of a lithium secondary battery of the embodiment are as follows:
Firstly, since the negative electrode active material layer 32 is made of silicon oxide, a theoretical capacity is greatly larger than a carbon powder layer. Secondly, since the silicon oxide is in the state of a thin film formed by vacuum vapor deposition or sputtering and has not only a low molar ratio of O to Si, but also denseness, an initial efficiency can be high without reducing an initial charge capacity. Thirdly, since a capacity per a unit volume of a thin film is large, down sizing is easy.
A film formation material for forming the negative electrode active material layer 32 of the secondary battery negative electrode 30 are described below:
   Suitable for the film formation material, as described above, is a deposit of SiO or a sintered compact produced from the deposit and especially, a sintered compact having a evaporation residue, when a thermogravimetric measurement on a sintered compact sample is conducted in a vacuum atmosphere under a pressure of 10 Pa at a heating temperature of 1300°C, of 4% or less of the mass of a sample before measurement.

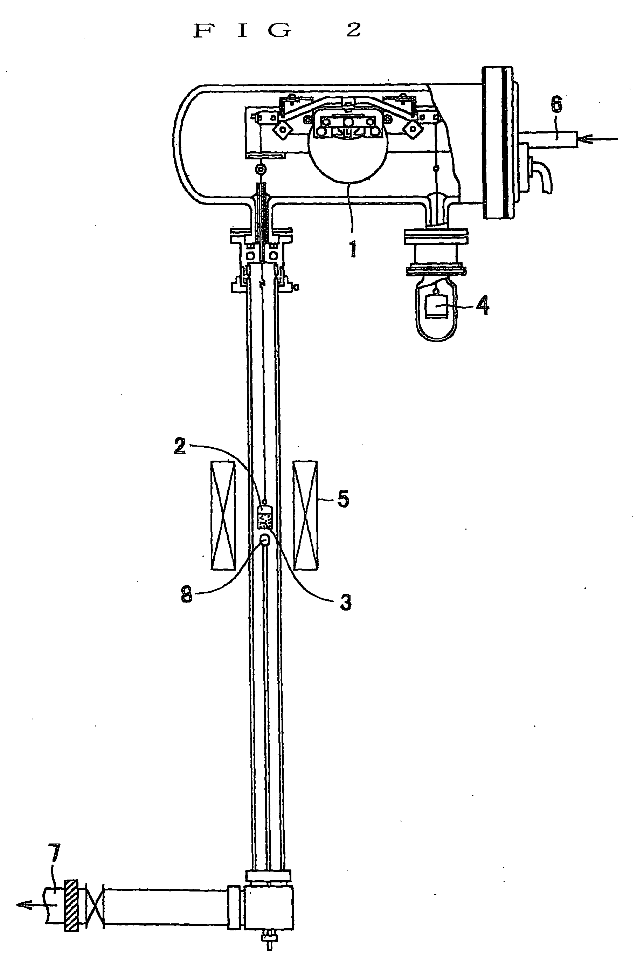

A thermogravimetric measurement of a sintered compact is conducted using a thermogravimetric measurement instrument of Fig. 2. To be concrete, a measurement sample 3 is put into a crucible 2 hanging from the distal end of one beam of a balance 1. On the other hand, a weight 4 having the mass of a right balance with the measurement sample 3 is hung from the distal end of the other beam. The thermogravimetric measurement instrument is equipped with a heating furnace 5, a gas inlet 6, a gas outlet and others with which a temperature of the measurement sample 3 and an atmosphere is adjusted.

When the mass of the measurement sample 3 decreases by evaporation of the measurement sample 3, a current is fed into a feedback coil installed in a uniform magnetic field to generate an electromagnetic force so as to restore the balance between the sample and the weight. Since, at this time, an electromagnetic force and a current value are in direct proportion to each other, a change in mass of the measurement sample 3 can be measured from a current value.

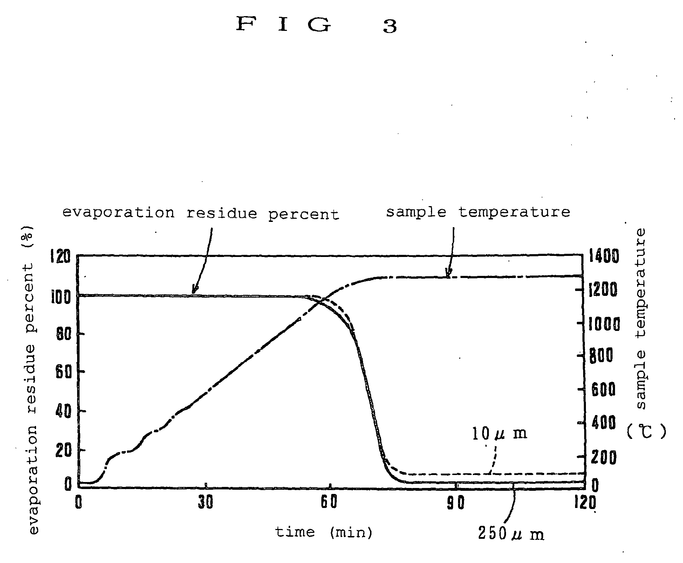

A thermogravimetric measurement is conducted in conditions that a temperature of the measurement sample 3 is 1300°C and an atmosphere is a vacuum atmosphere under a pressure of 10 Pa or less. The small variation in temperature, though it cannot be avoided in temperature of the measurement sample 3, can be allowed as far as the small variation in temperature falls within 1300 ± 50°C. In a case where thermogravimetric measurement is conducted in the conditions, amass of the sintered compact decreases as evaporation of silicon monoxide proceeds. In Fig. 3, there is shown a change in the measurement mass over elapse of time in this case plotted using a change in evaporation residue quantity relative to the mass 100% of a measurement sample before measurement. A temperature of the measurement sample was raised from room temperature to 1300°C in the measurement shown in the figure.

The measurement sample is, as shown in Fig. 3, put into a crucible; as a temperature is raised, the measurement sample starts evaporation and after a given time elapses, a mass of the measurement sample does not change substantially, thereby enabling a constant residue mass to be grasped. A preferable film formation material is a sintered compact of SiO with a mass of the evaporation residue in measurement, that is a mass of the constant residue of 4% or less of the mass before be measurement of the sample.

If this condition is satisfied, an evaporation rate of SiO is high and productivity of a silicon oxide thin film by vapor deposition can be improved. Besides, a molar ratio of O to Si is reduced; thereby enabling an initial efficiency to be raised without reducing an initial charge capacity.

A sintered compact of such an SiO can be produced in a procedure in which SiO powder with a particle diameter of 250 µm or more is press-molded and thereafter or while press-molding, the preform is sintered in a non-oxidizing atmosphere.

The reason why SiO powder with an average particle diameter of 250 µm or more is used as a raw material of the powder sintered compact is that since SiO powder with a particle diameter of less than 250 µm is large in surface area and silicon dioxide is formed on particle surfaces by natural oxidation, the sintered compact is affected by the presence of silicon dioxide, resulting in reduction in evaporation rate and decrease in initial efficiency. The upper limit of a particle diameter is preferably in the range of 2000 µm or less. If the upper limit exceeds 2000 µm, press-moldability and sinterability are reduced.

No necessity arises for particle diameters of the SiO powder to be almost equal to one another as far as an average particle diameter is 250 µm or more. The density of a sintered compact can be rendered high by mixing SiO particles with various particle diameters of 250 µm or more. If thedensityof a sintered compact is about 95% or less, particle diameters of SiO powder in the sintered compact can be examined by observing a section thereof with an optical microscope, thereby enabling whether or not SiO powder with an average particle diameter of 250 µm or more has been used to be confirmed.

Such SiO powder is press molded into an arbitrary shape and thereafter or while press molding, the green compact is sintered in a non-oxidizing atmosphere. In a case where sintering is performed after the press molding, no specific limitation is imposed on a method for press molding as far as the powder can be molded in a desired shape by a press. In a case where adhesiveness between SiO particles is poor, it is allowed that a small quantity of water is added into the SiO powder and the water is removed by a dehydration treatment. A load to be added of the order in the range of from 300 to 1500 kg per 1 cm² enables the SiO powder to be molded into an arbitrary shape.

On the other hand, in a case where sintering is performed while press molding, a load of the order in the range of from 100 to 300 kg per 1 cm² is sufficient because of a rise in temperature.

Sintering is desirably performed in a non-oxidizing atmosphere. The non-oxidizing atmosphere is an atmosphere containing no oxygen, for example an inert atmosphere such as a vacuum atmosphere or an argon gas atmosphere. Especially in a case where sintering is performed in a vacuum atmosphere, an evaporation rate of a sintered compact of SiO does not alters from that of SiO powder before the sintering; therefore, the sintering is preferably performed in a vacuum atmosphere. In a case where sintering is performed in an atmosphere containing oxygen, SiO powder is bonded between particles therein to decrease an evaporation rate thereof.

No specific limitation is imposed on a temperature of sintering as far as SiO particles are bonded to one another and a sintered compact can hold its shape. Sintering is sufficiently performed at a temperature in the range of from 1200 to 1350°C for 1 hr or more.

An effect of the invention will be cleared by showing examples of the first embodiment of the invention and comparing them with conventional examples.

In fabrication of a lithium secondary battery (with a size diameter of 15 mm and a thickness of 3 mm) shown in Fig. 1, a construction of the negative electrode was altered in various ways as described below.

As examples, thin films of silicon oxide were formed by means of an ion plating method, a common vapor deposition (resistance heating) , a sputtering method and a powder kneaded coated dried method, respectively, as an negative electrode active material layer on surfaces of collectors each made of a copper foil with a thickness of 10 µm. In the ion plating method, a thin film of silicon oxide was formed using an SiO powder sintered compact (a tablet) as a film formation material (vapor deposition source) with a heating source of an EB gun under a given vacuum atmosphere under a pressure of 10⁻³ Pa ( 10⁻⁵ torr) .

Film formation materials that were used include: the SiO powder sintered compact; in addition thereto, the SiO deposit; that is broken lumps of a SiO deposit obtained by heating a mixture of Si powder and SiO₂ under vacuum to generate SiO gas, and to form an SiO deposit on a deposition section at a low temperature; a mixed sintered compact of Si powder and SiO₂ powder; and silicon lumps.

The SiO powder sintered compacts that were used are three kinds with average particle diameters of powder of 250 µm, 1000 µm and 10 µm, respectively. Producing methods therefor are as follows: a method with the average particle diameter of powder of 250 µm adopts sintering (in a vacuum at 1200°C for 1.5 hr) while pressing with a press at a load of 100 kg/cm², a method with the average particle diameter of powder of 1000 µm adopts sintering (in a vacuum at 1200°C for 1.5 hr) while pressing with a press at a load of 100 kg/cm ² and a method with the average particle diameter of powder of 10 µm adopts sintering (in a vacuum at 1200°C for 1.5 hr) while pressing with a press at a load of 200 kg/cm².

Evaporation residue percents when a thermogravimetric measurement is performed on a sintered compact sample at a heating temperature of 1300°C in a vacuum atmosphere under a pressure of 10 Pa or less are 4%, 3%; and 8%, respectively. The measurement instrument of Fig. 2 was used in the thermogravimetric measurement. A heating temperature of 1300°C is a temperature measured with a thermocouple 8 at a distance of about 1 mm spaced from a measurement sample and the measurement sample is imagined to be heated substantially at the temperature. Data obtained by thermogravimetric measurement was put into order and a mass when substantially no change in mass of a measurement sample occurs was regarded as the mass of an evaporation residue to thereby calculate a ratio of the mass of the evaporation residue to the mass before the measurement (a evaporation residue percent) (see Fig. 3).

Samples of two kinds shown in Fig. 3 are two kinds of the three kinds of SiO powder sintered compacts and to be concrete, the two kinds are an SiO powder sintered compact (a solid line of Example 3) with an average particle diameter of 250 µm and an SiO powder sintered compact (a dotted line of Example 10) with an average particle diameter of powder of 10 µm. The evaporation residue percent of the former is 4% and that of the latter is 8%.

Various kinds of negative electrodes and positive electrodes prepared were combined, and pairs of an negative electrode and a positive electrode together with electrolytes were sealed in cases to complete lithium secondary batteries. Initial charge capacities, initial discharge capacities and initial efficiencies were measured on the various completed batteries. Note that fine powder of LiCoO₂ was used in a positive electrode and a nonaqueous electrolyte containing ethylene carbonate was used as an electrolyte.

In Table 1 , there are shown initial efficiencies calculated frominitialcharge capacities and initial discharge capacities. An initial charge capacity was evaluated with a current quantity per a unit volume and initial charge capacities were shown as a ratio relative to the data of Example 3 when the magnitude of the data of Example 3 is expressed as 1 of a unit value.

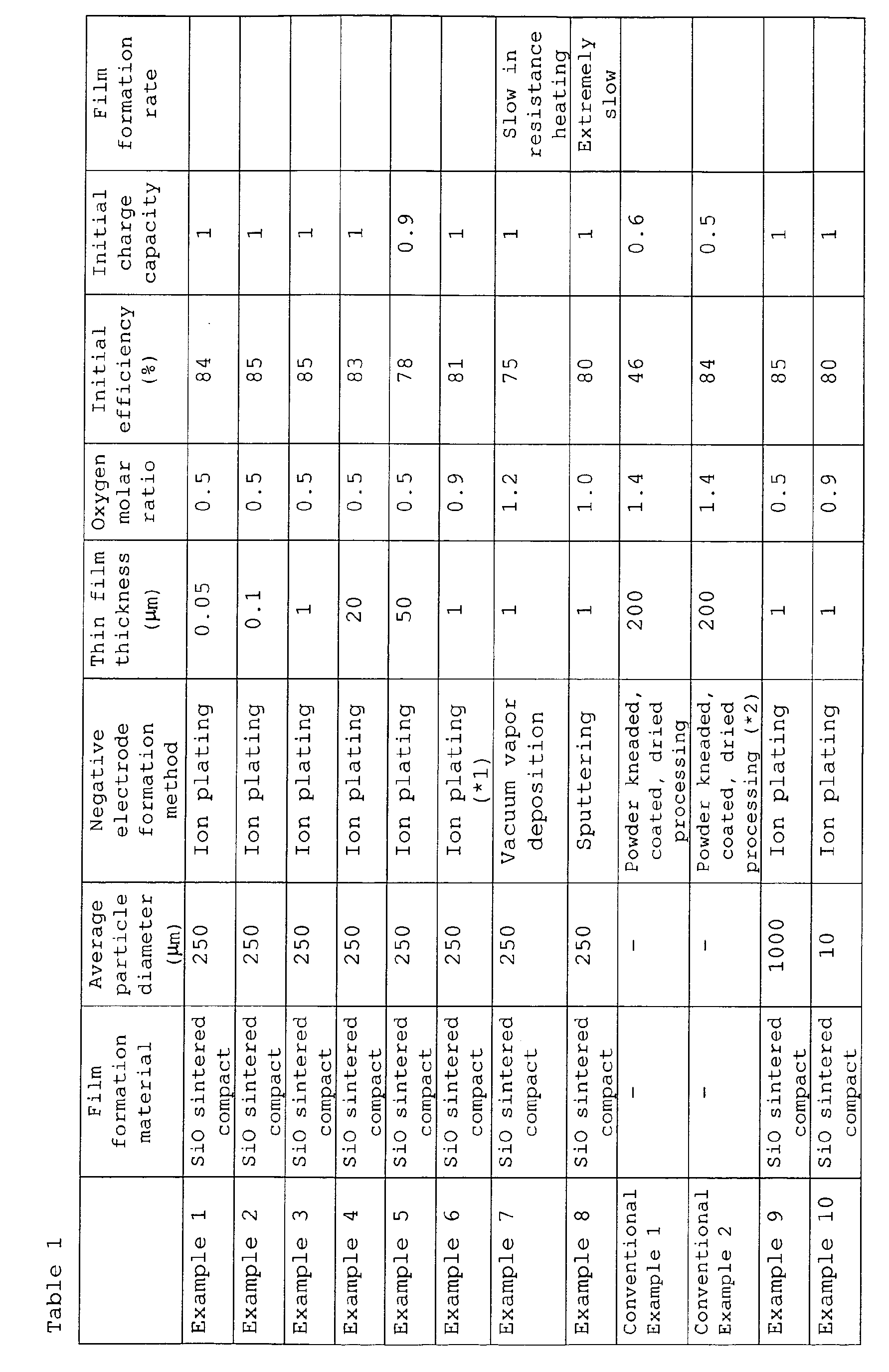

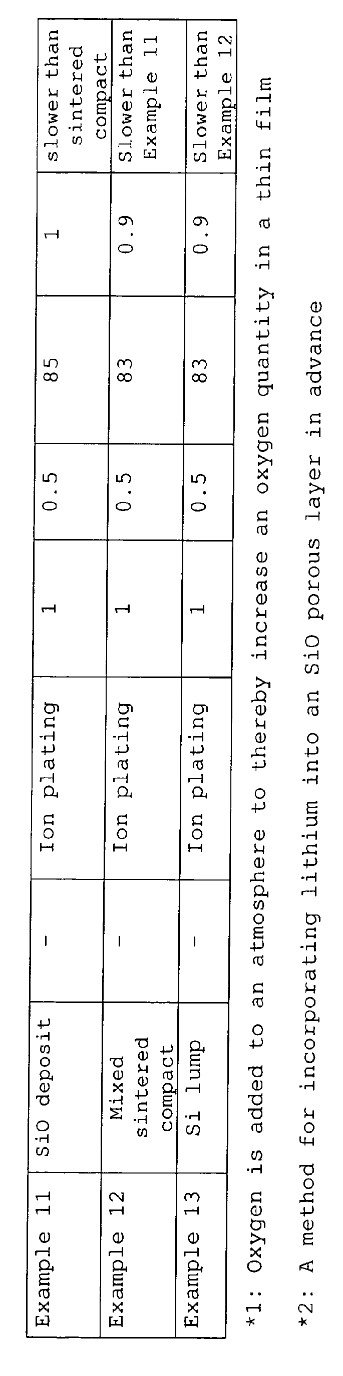

In Examples 1 to 8, SiO powder sintered compact (vacuum sintered compact) with an average particle diameter of powder of 250 µm was used and a method for film formation was altered in various ways.

A film formation method adopted in Examples 1 to 5 was an ion plating method. Thicknesses of thin films were of five kinds including 0.05 µm, 0.1 µm, 1 µm, 20 µm, and 50 µm. A molar ratio of O to Si in silicon oxide was 0.5 in any of thin films.

In Example 6, oxygen was added into a film formation atmosphere in a case of a thin film thickness of 1 µm to thereby intentionally increase a molar ratio of O to Si in silicon oxide.

In Examples 7 and 8, thin films each made of silicon oxide with a thickness of 1 µm was formed on surfaces of the collectors with common vacuum vapor deposition (resistance heating) and sputtering, respectively.

Incontrastthereto, in Conventional Example 1, fine powder of SiO was stacked on a surface of a collector by means of the powder kneaded coated dried method to form an negative electrode activematerial layer with a thickness of 200 µm. In Conventional Example 2, an negative electrode active material layer with a thickness of 200 µm made of SiO containing lithium incorporated thereinto in advance was formed on a surface of the collector by means of the powder kneaded coated dried method.

In a case where SiO is used as an negative electrode active material and a layer was formed by means of a powder kneaded coated driedmethod, a molar ratio of O to Si in the layer increases to 1.4. Since an initial discharge capacity is smaller than an initial charge capacity, an initial efficiency is as low as 46% (Conventional Example 1). By incorporating lithium into SiO in advance, an initial efficiency increases to 84%, but this is solely because an initial charge capacity decreases, being resulted in reduction in theoretical capacity of SiO, which would be otherwise excellent (Conventional Example 2).

A film of SiO, working as an negative electrode active material, was formed by means of an ion plating method instead of a powder kneaded coated dried method. A molar ratio of O to Si in the thin film decreased to 0.5. An initial efficiency was improved while an initial charge capacity was kept at a large value (Examples 1 to 5) . In Example 5, in which a film thickness is large, though, an initial charge capacity and initial efficiency were slightly reduced. In Example 6, in which a molar ratio of O to Si increased to 0.99, an initial efficiency is slightly reduced, but still kept at a high level and an initial charge capacity is also large.

In Examples 7 and 8, in which thin films were formed by means of common vacuum vapor deposition and sputtering, a molar ratio of O to Si in the thin film exceeds 1. An initial efficiency is slightly reduced, but still kept at a high level as compared with that when ion plating is applied and an initial charge capacity is also at a high level. A film formation rate is lower when common vacuum vapor deposition is applied and further lower when sputtering is applied as compared with that when an ion plating method is applied.

On the other hand, in Examples 9 to 13, an ion plating method is used as a film formation method and various kinds of film formation materials were used. A film thickness was set to 1 µm.

In Example 9, a film formation material was SiO powder sintered compact (vacuum sintered compact) having an average particle diameter of powder of 1000 µm. In Example 10, a film formation material that was used is an SiO powder sintered compact (vacuum sintered compact) having an average particle diameter of powder of 10 µm. Evaporation residue percents were 3% and 8%, respectively. In Example 9, an effect on a battery performance is saturated as compared with that in Example 3, in which a film thickness is the same with a value of 1 µm, and in Example 10, a molar ratio of O to Si in a thin film is slightly reduced as compared with that in Example 3. Consequently, an average particle diameter of powder in an SiO powder sintered compact is preferably 250 µm or more.

In Example 11, an SiO deposit in lumps (an average particle diameter of the order of 5 cm across) was used. An initial efficiency and initial discharge capacity both equivalent to a case of powder sintered compact, though actually a deposit was used, were obtained as compared with those in Example 3, in which a film thickness is the same with a value of 1 µm. On the other hand, since splashing during film formation is at a lower level when a sintered compact is used than when a deposit is used, a film formation rate (evaporation rate) can be further increased. Hence, a sintered compact is preferable from the aspect of productivity. A sintered compact also has an advantage that continuous feed of a raw material to a film formation apparatus is easier. The reason for less splashing during film formation with an SiO sintered compact is imagined to be that SiO, which is a film formation material, is strongly bonded in the SiO sintered compact than in an SiO deposit.

In Example 12, a mixed sintered compact of Si powder and SiO₂ powder was used. The effect on a battery performance is obtained with this film formation material, but a film formation rate is fairly small. An SiO deposit and an SiO sintered compact can form a film only by raising a heating temperature to a sublimation temperature of SiO, whereas a mixture of Si powder and SiO₂ powder is first of all necessary to react with each other at contact sites in the sintered compact between Si and SiO₂ to generate SiO. Hence, the mixed sintered compact is lower in SiO generation rate than an SiO deposit or an SiO sintered compact. Since a large heat quantity applied, though raising the generation rate, increases splashing while a film is formed, there arises a restraint that a film formation rate is, in conclusion, obliged to be rendered small.

In Example 13, film formation is conducted in an oxidizing atmosphere with silicon lumps cut off from a silicon ingot prepared by means of a casting method. A battery performance equivalent to that in a case of the mixed sintered compact of Example 12 is obtained. An oxidizing atmosphere is formed by introducing oxygen gas into an atmosphere. In this case, since a necessity arises for freeing Si atoms away from a material surface, splashing is easier to occur than a mixed sintered compact. Hence, a film formation rate is further smaller.

### (Second Embodiment)

What attention should be paid to of a lithium secondary battery of the second embodiment is that an negative electrode activematerial layer 32 of an negative electrode 30 is comprising a dense thin film of SiO formed on a collector 31 with an SiO deposit as a film formation material by vacuum vapor deposition or sputtering, preferably ion plating, which is a kind of the vacuum vapor deposition. To be more concrete, the negative electrode active material layer 32 of the negative electrode 30 is a thin film made of an SiO deposit with a weight decrease percent (a rattler value) in a rattler test of 1.0% or less. A thickness of the thin film is appropriately in the range of 0.1 to 50 µm.

On the other hand, a positive electrode active material 22 of a positive electrode 20 is prepared in a conventional procedure according to a powder kneaded coated dried method in which powder of oxide of a transition metal containing lithium such as LiCoO₂ is mixed into a binder solution to obtain a slurry, the slurry is coated on a surface of a collector 21 and dried, followed by pressing. The other parts of the construction are the same as the corresponding parts in a case of the first embodiment.

Features of a lithium secondary battery of the second embodiment are as described below:
Firstly, since the negative electrode active material layer 32 is made of SiO, a theoretical capacity is greatly larger than a carbon powder layer. Secondly, since the SiO is in the state of a thin film formed by vacuum vapor deposition or sputtering, an initial efficiency can be high without reducing an initial charge capacity. Thirdly, since a capacity per a unit volume of a thin film is large, down sizing is easy. Fourthly, since a film formation material that is used is an SiO deposit with a weight decrease percent (a rattler value) in a rattler test of 1.0% or less, a cycle characteristic is excellent. To be concrete, the cycle characteristic is better than an SiO layer formed by means of a powder kneaded coated dried method and equivalent to that of a thin film formed using an SiO sintered compact.

The effect of the invention will be cleared by showing examples of the second embodiment of the invention and comparing them with comparative examples.

An SiO deposit was produced as a film formation material. To be concrete, a mixture of Si powder and SiO₂ powder is heated in a vacuum to thereby generate SiO gas, to deposit SiO on a deposition section at a low temperature and to eventually produce the SiO deposit. In this case, physical properties were varied by altering conditions for deposition such as production conditions, a structure of the deposition section and others (see a pamphlet of International Publication No. WO 03/025246) .

A rattler test was performed on various kinds of SiO deposits produced and measured rattler values. An SiO film was formed on a surface of a collector constituted of a copper foil with a thickness of 10 µm as the negative electrode active material layer with each of various kinds of produced SiO deposits by means of an ion plating method. In the ion plating method, an SiO film (with a film thickness of 5 µm) was formed using an EB gun as a heating source in a given vacuum atmosphere under a pressure of 10⁻³ Pa (10⁻⁵ torr) .

Various kinds of the negative electrodes and the positive electrodes thus produced were combined and pairs of an negative electrode and a positive electrode together with an electrolyte were sealed in cases to complete respective lithium secondary batteries (with a size diameter of 15 mm and a thickness of 3 mm). Cycle characteristics of the completed batteries of various kinds were measured. A cycle characteristic was evaluated with a ratio of a discharge quantity in the tenth time to the first discharge quantity (a capacity sustainability). Note that fine powder of LiCoO₂ was used for the positive electrode and a nonaqueous electrolyte containing ethylene carbonate was used as an electrolyte.

In Table 2, there is shown a relationship between a measured capacity sustainability and a rattler value. As a rattler value of an SiO deposit, which is a film formation material, decreases, as understood from Table 2, a capacity sustainability increases and a sustainability of 98% or more is secured at a rattler value of 1% or less.

**Table 2**

| | Rattler value (%) | Capacity sustainability (%) |
|---|---|---|
| Example 1 | 0.5 | 98.8 |
| Example 2 | 0.8 | 98.5 |
| Example 3 | 1.0 | 98.0 |
| Comparative Example 1 | 1.2 | 92.7 |
| Comparative Example 2 | 1.4 | 83.6 |

An initial efficiency is 50% or less in a case of an SiO layer formed by means of a powder kneaded coated dried method. An initial efficiency is raised to 80% or more by incorporating lithium into SiO in advance, but this is solely because an initial charge capacity decreases, leading to reduction in theoretical capacity of SiO, which would be otherwise excellent. In a case where a film is formed with an SiO deposit, an initial efficiency is improved to 80% or more while an initial charge capacity is kept large.

### (Third Embodiment)

What attention should be paid to about a lithium secondary battery of the third embodiment is that an negative electrode active material layer 32 of an negative electrode 30 is constituted of a dense thin layer of SiO formed on a collector 31 by vacuum vapor deposition, or sputtering, preferably ion plating, which is a kind of the vacuum vapor deposition, with an SiO deposit as a film formation material.

To be more concrete, an SiO film is formed on a surface of a collector 31 by not only applying a cleaning treatment to a surface of the collector 31 by surface treatment bombardment with direct current magnetron discharge in a vacuum chamber but also, directly subsequent thereto, applying ion plating to the surface of the collector 31 in the vacuum chamber without exposing to an air atmosphere. A thickness of the SiO film is appropriately in the range of from 0.1 to 50 µm.

On the other hand, a positive electrode active material layer 22 of a positive electrode 20 is formed in a conventional procedure according to a powder kneaded coated dried method in which powder of oxide of a transition metal containing lithium such as LiCoO₂ is mixed into a binder solution to obtain a slurry, the slurry is coated on a surface of a collector plate 21, and dried, followed by pressing. The other parts of the construction are the same as the corresponding parts in cases of the first and second embodiments.

Features of a lithium secondary battery of the third embodiment are as described below:
Firstly, since the negative electrode active material layer 32 is made of SiO, a theoretical capacity is greatly larger than a carbon powder layer. Secondly, since the SiO is in the state of a thin film formed by vacuum vapor deposition or sputtering, an initial efficiency can be high without reducing an initial charge capacity. Thirdly, since a capacity per a unit volume of the thin film is large, down sizing is easy. Fourthly, an excellent cycle characteristic is also obtained in a case where an SiO deposit is used as a film formation material by applying a cleaning treatment to a surface of a collector 31 in a vacuum and forming a film, directly subsequent thereto, in the vacuum without exposing the surface to an air atmosphere.
The effect of the invention will be cleared by showing examples of the third embodiment of the invention and comparing them with comparative examples.

An SiO film was formed on a surface of a collector constituted of a copper foil with a thickness of 10 µm as an negative electrode active material layer by means of an ion plating method using an SiO deposit as a film formation material. In the ion plating method, the SiO film (with a film thickness of 5 µm) was formed with an EB gun as a heating source in a given vacuum atmosphere of 10⁻³ Pa (10⁻⁵ torr) .

In this case, as a comparative example, after a surface of the collector is cleaned in the air and dried, a film was formed in a vacuum chamber. Besides, as an example of the invention, after a surface of a collector was cleaned in a bombardment treatment in a vacuum chamber, a film was formed on the surface directly subsequent thereto in the vacuum chamber.

Two kinds of negative electrodes and two kinds of positive electrodes produced were combined and two pairs of an negative electrode and a positive electrode together with an electrolyte are sealed into cases to complete lithium secondary batteries (with a size diameter of 15 mm and a thickness of 3 mm) . Cycle characteristics of the completed two batteries were measured. A cycle characteristic was evaluated with a ratio (a capacity sustainability in percent) of the discharge quantity in the tenth time to the discharge quantity in the first time. Note that fine powder of LiCoO₂ was used in the positive electrode and a nonaqueous electrolyte containing ethylene carbonate was used as an electrolyte.

The cycle characteristic of the comparative example was 85% and that of the example of the invention was an improved value of 98%. That is, in the example of the invention, the surface of a collector was isolated from the air atmosphere in a process from the cleaning treatment on the collector to the film formation step to thereby obtain as high as 98% of a cycle characteristic despite of use of an SiO deposit.

In a case where an SiO sintered compact was used as a film formation material, a cycle characteristic was 90% in a case where the same pretreatment as in the comparative example was performed. A cycle characteristic was improved to 99% in a case where the same pretreatment as in the example was performed. As understood from the above discussion, the invention is effective for a case where an SiO sintered compact is used as a film formation material.

An initial efficiency in a case where an SiO layer is formed by means of a powder kneaded coated dried method is 50% or less. An initial efficiency is raised to 80% or more by incorporating lithium into SiO in advance, whereas this is solely because an initial charge capacity decreases, being resulted in reduction in theoretical capacity of SiO, which would be otherwise excellent. In a case where a film is formed with an SiO deposit or an SiO sintered compact, an initial efficiency is improved to 80% or more while an initial charge capacity is kept large.

Note that while a button cell is shown as a battery model in each of the first to third embodiments, an negative electrode is thinner in the invention; therefore, increase in capacity can be realized by stacking with ease. Hence, the invention is especially preferable for obtaining a layer-built cell and has a feature that application thereof to a layer built cell enables a small size cell with a large capacity to be provided at a low cost. In a case where the invention is applied to a layer built cell, other constituents such as a positive electrode active material layer, a collector and a separator can be thin films in a similar way to that in the negative electrode active material layer.

### INDUSTRIAL APPLICABILITY

A lithium secondary battery of the invention can greatly improve an initial efficiency, which would be otherwise low as a fault, without degrading a magnitude of an initial charge capacity, which is a feature of a lithium secondary battery using SiO as an negative electrode with the construction that a thin film of silicon oxide formed by vacuum vapor deposition or sputtering on a collector surface, which exerts a great effect on improvement of a performance and down-sizing of a lithium secondary battery.

A lithium secondary battery negative electrode of the invention is an SiO film type negative electrode in which a silicon oxide film is formed on a surface of a collector as an negative electrode active material and a capacity sustainability thereof as a cycle characteristic in the tenth time of discharge is 98% or more and thereby, an initial efficiency and an initial charge capacity are large and a cycle characteristic is also good.

With the negative electrodes employed, a lithium secondary battery of the invention can greatly improve an initial efficiency, which would be otherwise low as a fault, without reducing a magnitude of an initial charge capacity, which is a feature of a lithium secondary battery using SiO as an negative electrode, can also improve a cycle characteristic and exerts a great effect on improvement on a battery performance and down sizing.

Since a film formation material of the invention is made of a deposit of SiO or a sintered compact produced from the deposit , the film formation material is used in formation of a thin film of silicon oxide of a lithium secondary battery negative electrode, can greatly improve an initial efficiency, whichwould otherwise low as a fault, without reducing a magnitude of an initial charge capacity which is a feature of a lithium secondary battery using SiO as an negative electrode, and exerts a great effect on improvement on performance and down sizing of a lithium secondary battery. Besides, the film formation material has a large evaporation rate and thereby can improve a film formation rate.

Since a film formation material of the invention is also an SiO deposit and a weight decrease percent (a rattler value) in a rattler test is 1% or less, an initial efficiency can be improved without decreasing an initial charge capacity and, besides, improvement on a cycle characteristic can be realized.

A fabricating method for a lithium secondary battery of the invention can provide an negative electrode having an excellent characteristic capable ofgreatlyimproving aninitial efficiency, which would be otherwise low as a fault, without reducing a magnitude of an initial charge capacity, which is a feature of a lithium secondary battery using SiO as an negative electrode, by forming a thin film of silicon oxide on a surface of a collector with vacuum vapor deposition or sputtering and the negative electrode exerts a great effect on performance improvement and down sizing of a lithium secondary battery.

A fabricating method for a lithium secondary battery negative electrode of the invention can also improve an initial efficiency and a cycle characteristic together therewith without being accompanied by a reduction of an initial charge capacity by using an SiO deposit with a weight decrease percent (a rattler value) in a rattler test of 1% or less.

A fabricating method for a lithium secondary battery negative electrode of the invention can secure a good cycle characteristic in a case where an SiO deposit is used as a film formation material as well as in a case where an SiO sintered compact is used as a film formation material by, in a case where a silicon oxide material film is formed as an negative electrode active material on the surface of the negative electrode collector, applying a cleaning treatment to a surface of a collector in a vacuum or in an inert atmosphere and thereafter forming a film of silicon oxide on the surface of the collector without exposing the surface of the collector to the air atmosphere. Besides, the use of the film forming materials enables an initial efficiency to be improved without being accompanied by a reduction in initial charge capacity.

## Claims

1. A lithium secondary battery negative electrode having a thin film of silicon oxide formed by vacuum vapor deposition or sputtering on a surface of a collector.

2. The lithium secondary battery negative electrode according to claim 1, wherein a thickness of the thin film of silicon oxide is in the range of from 0.1 to 50 µm.

3. The lithium secondary battery negative electrode according to claim 1, wherein the vacuum vapor deposition is an ion plating method.

4. The lithium secondary battery negative electrode according to claim 1, wherein the silicon oxide is SiOx (0.5 ≤ x ≤ 1.2) .

5. The lithium secondary battery negative electrode according to claim 4, wherein the silicon oxide is SiOx (0.5 ≤ x < 1.0) .

6. A lithium secondary battery negative electrode, being an SiO film type negative electrode obtained by forming a silicon oxide film as an negative electrode active material on a surface of the collector and having a capacity sustainability in discharge in the tenth time of 98% or more.

7. A lithium secondary battery having an negative electrode according to any of claims 1 to 6.

8. A film forming material, used in forming a thin film of silicon oxide of a lithium secondary battery negative electrode with vacuum vapor deposition or sputtering, and being a deposit of SiO or a sintered compact produced from the deposit.

9. The film formation material according to claim 8, being the sintered compact and having an evaporation residue when a thermogravimetric measurement on a sintered compact sample is conducted in a vacuum atmosphere under a pressure of 10 Pa or less at a temperature of 1300°C of 4% or less of the mass of the sample before the measurement.

10. The film formation material according to claim 8, being a powder sintered compact and having an average particle diameter of powder thereof of 250 µm or more.

11. The film formation material according to claim 8, being a deposit of SiO and having a weight decrease percent (a rattler value) in a rattler test of 1.0% or less.

12. A fabricating method for a lithium secondary battery negative electrode forming a thin film of silicon oxide on a surface of a collector by vacuum vapor deposition or sputtering.

13. The fabricating method for a lithium secondary battery negative electrode according to claim 12, using an ion plating method, which is a kind of the vacuum vapor deposition.

14. The fabricating method for a lithium secondary battery negative electrode according to claim 12, using a film formation material according to any of clams 8 to 11 as a film formation material in the vapor deposition or sputtering.

15. A fabricating method for a lithium secondary battery negative electrode, wherein in formation of a thin film of silicon oxide as an negative electrode active material on a surface of the negative electrode collector, the surface of the collector is applied with a cleaning treatment in a vacuum or an inert atmosphere and thereafter, film formation with silicon oxide is performed on the surface of the collector without exposing the surface of the collector to the air atmosphere.

16. The fabricating method for a lithium secondary battery negative electrode according to claim 15, using a vacuum vapor deposition method or a sputtering method as a formation method for a silicon oxide film.

17. The fabricating method for a lithium secondary battery negative electrode according to claim 15, using an SiO deposit as a film formation material in forming a silicon oxide film.
